# EUROPEAN PATENT APPLICATION

(11) **EP 1 650 852 A1**
(43) Date of publication of application: **26.04.2006**
(21) Application number: 05380234.4
(22) Date of filing: 21.10.2005
(51) Int. Cl.: H02K 19/26

(54) **Electrical alternator having static inductor coil and mobile inductor core**

(30) Priority: 21.10.2004 ES 200402396 U
(71) Applicant: Perez Rodriquez, Arturo, 28220 Majadahonda (ES)
(72) Inventor: Perez Rodriquez, Arturo, 28220 Majadahonda (ES)

(57) **Abstract**

**Conventional automotive** alternators have an inductor coil that rotates with the inductor assembly, or if fixed to the inner part of the stator, lies between the two polar cores, one polarity N and the other polarity S of the rotor.

The magnetic circuit comprises necessarily polarities N and S and closes **circumferentially** through two air gaps with the package of special magnetic steel plates of the stator's armature.

This conventional layout results either in the need of feeding sliding rings, to carry the electrical current to the coil, or to a substantial increase of the length of the package of the stator and of the active wires of its windings, with the corresponding bigger electrical resistive loses and superfluous heat production and greater difficulties and cost of construction and repair.

The proposed innovation eliminates the need of sliding rings, because the inductor coil is static, and reduces drastically the cost of construction and repair, because the inductors coil in not enclosed by the two cores of the rotor.

It is really an innovation because the magnetic circuit is moved by the mobile half core of the rotor, whereas the coil remains static, and the casing or housing of the alternator carries the magnetic flux radially through the package of the stator.

All that gives the new design many possibilities of increased power output with water cooling and important construction and repair cost reductions.

The stator and armature windings can be as one of the conventional automotive alternators.

## Description

### SCOPE OF THE INNOVATION

The proposed innovation concerns the design and construction of alternators in order to avoid inconvenient features of the existing ones and to introduce improvements not known until now in the construction, performance, maintenance, repair, and cost, of the electrical alternators, mainly in the automotive field.

### BACKGROUND.

The proposed innovations have to do with the inductor coil and the path of the magnetic flux:

The inductor coil is static and the magnetic flux goes through half the mobile inductor core (rotor), to the stator and radially through this to the casing that holds the stator armature and the inductor coil.

This layout is specific of the invention: in all the existing alternators the magnetic circuit goes from one of the half core of the inductor to the stator armature and through this, circumferentially, to the other core of the inductor, or rotor, even in the case where the inductor coil is fixed to the inside of the package of the stator, between the two cores of the rotor.

### DESCRIPTION

The inductor coil (1), which is fixed to the casing (2), is fed directly from the external source, because it is static. It can be easily placed or replaced for repairs, what is much cheaper than in the conventional layouts.

The magnetic flux passes radially though the package of special magnetic steel sheet plates of the stator (3). Owing to this layout the coils of the stator can be winded from the outside of the pack, what cuts drastically the cost of manufacturing and repairing of the alternator.

### DRAWINGS.

Figure 1 shows the cross section of an alternator with two static inductor coils.
Figure 2, shows the cross section of an alternator with only one static inductor coil.

### DESCRIPTION OF ONE MAKE

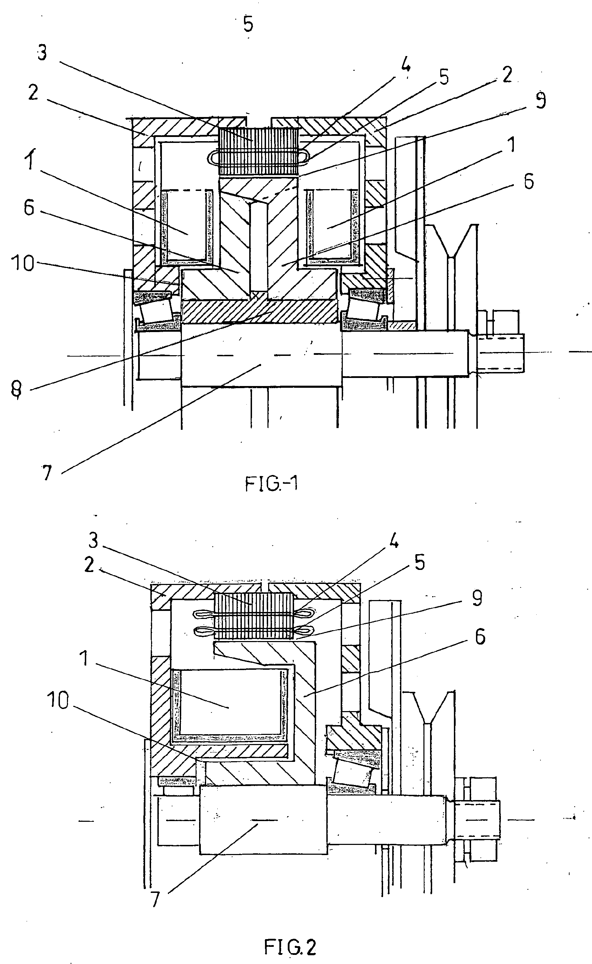

Talking of Fig. 1, the two inductor coils (1) are fixed to the respective magnetic half-casings (2), that hold also the package of magnetic steel plates of the stator (3), in which are winded two separate windings, (4) in the outside and (5) in the inside of the armature (3).

The mobile inductor is formed by two cores (6) pressed on the paramagnetic sleeve (8) of the shaft (7).

The inductor coils (1) are external with respect to the mobile inductor, (6) and (6), that is, they are not placed between the two cores of the rotor, as they are in other layouts.

The electrical current of the inductor coils generate two crowns of magnetic poles in the mobile cores (6), whose magnetic circuits are independent, because the respective fluxes go through separate paths, the air gap (9), radially through the stator package (3), the magnetic casing (2), the other air gap (10) and each mobile core (6)

The polarity can be North - South, or the same on the two crowns.

Talking of Fig .2, there are the same components as in Fig. 1, but only one of each type, with the exception of the stator package that is single and common to both designs.

In the case of alternator Fig. 2, the paramagnetic sleeve is not necessary, because there is only one core, N or S.

One prototype has been built accordingly to Fig. 2, and has been tested with success as shown on the test report number 050103 n° 320, issued by the Laboratory of the Electrical Engineering of the University School of Technical Engineering of the Polytechnic University of Madrid.

Alternator of Fig. 2 could be told to be half of that of Fig. 1, what shows more clearly the differences of the proposed design with respect to the conventional ones.

## Claims

1. ELECTRICAL ALTERNATOR HAVING STATIC INDUCTOR COIL AND MOBILE INDUCTOR CORE, in which each half casing (2), built with iron or magnetic material, holds in one end the inductor coil (1) fixed to it, and on the other side, the stator armature (3) and is part of the magnetic circuit of each inductor coil, together with each mobile core (6), that are separated by the air gap (9) from the stator armature, and by the air gap (10), from the casing (2) of the alternator.

2. Electrical alternator, following claim 1, which can hold one or two inductor assemblies, which in the last case can be of the same or opposed polarities.

3. Electrical alternator, following the preceding claims, in which the stator can hold one or two windings, one on the interior side and other on the outside part of the armature package.
